# EUROPEAN PATENT APPLICATION

(11) **EP 4 625 329 A1**
(43) Date of publication of application: **01.10.2025**
(21) Application number: 24165727.9
(22) Date of filing: 24.03.2024
(51) Int. Cl.: G06T 11/20

(54) **METHOD AND SYSTEMS FOR CONVERTING FILL TO STROKE IN A GRAPHICS FILE**

(71) Applicant: Esko Software BV, 9051 Ghent (BE)
(72) Inventor: VAN KERCKHOVE, Bert, 8105 Regensdorf (CH)
(74) Representative: Jonas, Hans-Hermann

(57) **Abstract**

A computer-implemented method for defining a stroke. The method includes defining an outline of the filled shape, defining parallel segments in the defined outline, and converting Bézier segments in the defined outline to an approximation with straight line segments. Parallel pairs of segments are identified, with a most prevalent distance between the identified parallel pairs being identified as a line weight. End-cap-defining segments are identified as parallel segments having only non-parallel segments between them. A center line of the segment pair is then identified as the end-cap location. Center lines of remaining non-end-cap-defining segments are connected to one another, and neighboring segments and their respective center lines are also connected. Center lines are classified as finished or non-finished. Pairs of unfinished segments and their respective center lines are connected, and colinear segments merged. The connected center lines are then converted to an output path defined by a stroke.

## Description

### BACKGROUND OF THE INVENTION

In some processes stroked paths are converted to fills, after which many of the desired features of stroked paths are lost, such as the shape of original center line and the line width of the original stroke. For example, a stroked cutting path that has been converted to a filled path may be unusable as a guide for a cutter (e.g. of a cutting table). Similarly, stroked registration marks that have been converted to fill may not be recognized anymore by software in an automated fashion.

By way of background, path construction in a graphics file, such as a portable document file (PDF) commonly used in the field of printing and publishing, incorporate a number known concepts and definitions used herein.

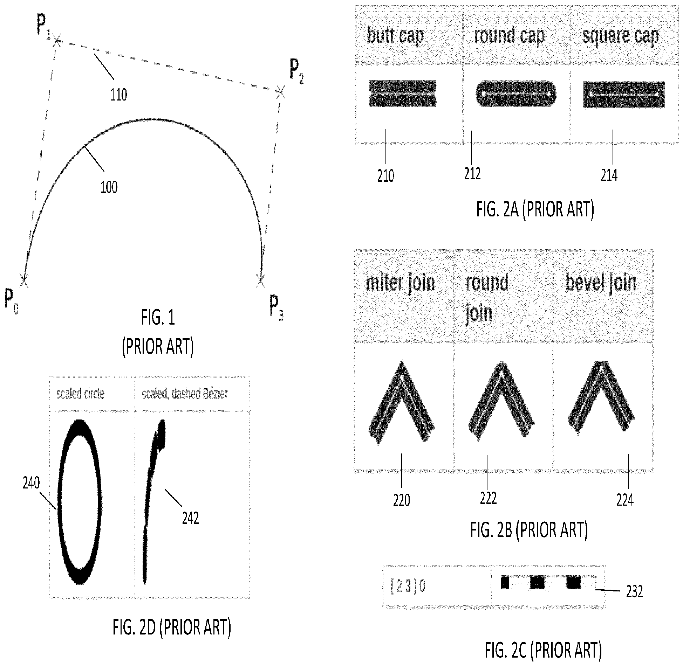

In general, a "path" as referred to herein comprises a sequence of straight lines (lineto's) and Bézier curves (curveto's). Straight lines are "painted" between two coordinates: a begin point and an end point. Referring now to Fig. 1, Bézier curves such as curve 100 are also drawn between a begin point Po and an end point P₃, but have two additional control points P₁, P₂ that define the curving. A painted Bézier is typically bounded by a quadrilateral 110 defined by its two end points and two control points. "Stroking" a path means rendering the path along its sequence of straight lines and curves according to several parameters. Among these parameters are:
- Line width -- defines the thickness of the painted lines and curves of which the path is the center line.
- Line cap style - referring to FIG. 2A, an unconnected begin or end point in a PDF is typically capped in one of three possible manners: a butt cap 210, a round cap 212, or a square cap 214.
- Line join style - referring to FIG. 2B, the joint between connected segments (lines, B6ziers) in a PDF can be painted according to 3 different styles: miter join 220, round join 222, or bevel join 224. Mitered joins are typically controlled by an extra "miter limit" parameter.
- Dash pattern -- referring now to FIG. 2C, a dash pattern 232 in a PDF can be set to stroke a path defining the number and size of dashes and gaps. The numeric "[2 3] 0" in FIG. 2C represents [length in coordinate system units of the "on" dash, length in coordinate system units of the "off" dash] offset in coordinate system units from the first point of the stroke. The ends of each dash will be painted according to the Line cap style and a dash wrapping around a corner will be painted according to the line join style.
- Disproportional scaling - referring now to FIG. 2D, drawing in a PDF may be influenced by an extra transformation matrix which can be used to move, rotate, scale and skew the painted path, such as the scaled circle 240 and scaled, dashed Bezier 242. Because scaling can be disproportional, line width can vary along lines with different orientation.

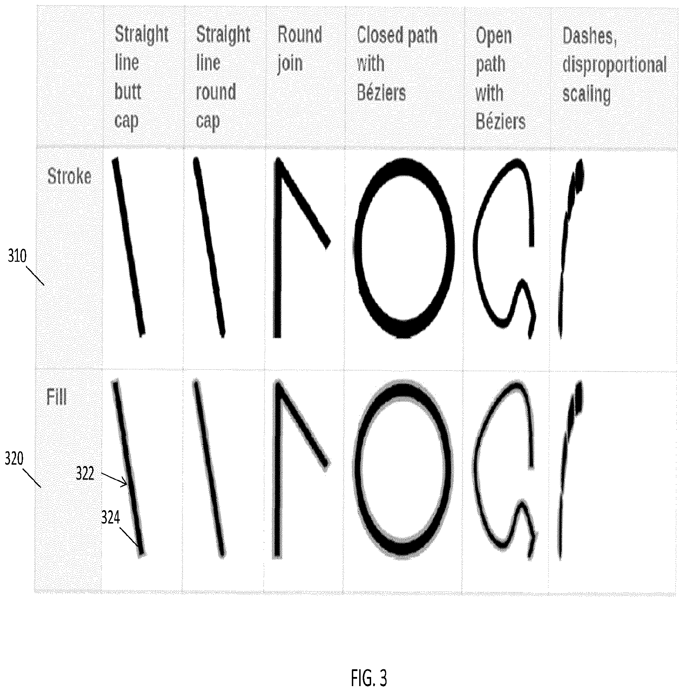

It is known in the art to convert a stroked path to fill, referred to herein as a Convert Stroke to Fill Action. When a stroked path is converted to fill, the result will be one or more closed, filled paths without stroke, with the shape(s) of the one or more paths dependent upon the stroke parameters. In the examples depicted in FIG. 3, comprising row 310 of stroke shapes corresponding to the column labels as shown and a corresponding row 320 of fill shapes corresponding to the fill shapes in the row above, the [red] lines surrounding the fill shapes (e.g. rectangular line 322 surrounding straight line butt cap fill shape 324) in row 320 indicate the shapes of the closed filled paths resulting from converting a stroke to fill.

### SUMMARY OF THE INVENTION

One aspect of the invention relates to a computer-implemented method for defining a stroke corresponding to a fill shape in a graphics file. In embodiments, the fill shape comprises a shape previously converted from a stroke using a stroke-to-fill algorithm. The method comprises the steps of defining an outline of the filled shape; defining parallel segments in the defined outline, including converting Bézier segments in the defined outline to an approximation with straight line segments; and identifying parallel pairs of segments within a predetermined tolerance. Then, a most prevalent distance between the identified parallel pairs is identified as a line weight corresponding to the resulting stroke, and parallel pairs with a distance different from the identified line weight are discarded. Additional steps may be performed to further reduce the number of parallel pairs, such as creating a plurality of quadrilaterals embodying the end points of each pair of parallel segments and for segments that run parallel to more than one other segment, retaining only pairs that form a least distorted quad-point. Next, end-cap-defining segments are identified as parallel segments having only non-parallel segments between them. A center line of the segment pair is then identified as the end-cap location. Center lines of remaining non-end-cap-defining segments are connected to one another, and segments that are neighboring segments and their respective center lines are also connected. Center lines having opposite ends connected to either an endcap or to another centerline are classified as finished, and remaining center lines are classified as non-finished. Pairs of unfinished segments and their respective center lines are connected, and co-linear segments are merged. The connected center lines are then converted to an output path defined by a stroke.

Additional stroke properties, such as color, alpha, overprint, may be defined from original fill properties. The method may include creating Bézier curves from one or more straight line segments by curve fitting. The method may also include defining an end-cap style for each end cap. Identifying a round end-cap style may include analyzing a plurality of non-parallel segments defined between two parallel segments and determining that end points of the plurality of non-parallel segments are located at an approximately constant distance from a defined endcap of a corresponding centerline. Identifying a square or butt end-cap style may include determining that endpoints of one or more non-parallel segments defined between two parallel segments lie on a connecting line between the parallel segments.

The method may further include defining a line join style as miter, round or beveled. This may include identifying intersection points of center lines of neighbor non-parallel, non-end-cap segment pairs, and determining if corresponding end points of the neighbor non-parallel are located at a constant distance at half the identified line width from the intersection point, thus identifying the join is defined as a round join, and if the corresponding end points of the segments are co-linear, thus identifying the join as a miter or bevel join. The method may further include identifying a pattern of repeating strokes of common length separated by gaps of a common length as a converted dashed stroke.

### BRIEF DESCRIPTION OF THE DRAWINGS

FIG. 1 depicts an exemplary Bézier curve.
FIG. 2A depicts the different types of end caps for a stroke.
FIG. 2B depicts the different types of joins known in the art for joined strokes.
FIG. 2C depicts a dashed line.
FIG. 2D depicts scaled shapes.
FIG. 3 is a table depicting different types of shapes and their corresponding representations as fills and strokes.
FIG. 4A depicts an outline of a straight line in fill and a corresponding stroke.
FIG. 4B depicts an outline of a composite line in fill and a corresponding stroke.
FIG. 4C depicts an outline of intersecting line in fill and a corresponding stroke.
FIG. 4D depicts an outline of a self-intersecting line in fill and a corresponding stroke.
FIG. 4E depicts an outline of a Bézier curve in fill and a corresponding.
FIG. 5A is a table depicting different types of shapes and their corresponding outlines and centerlines formed using a Voronoi partitioning algorithm.
FIG. 5B depicts a magnified portion of the Bézier curve cell depicted in FIG. 5A.
FIG. 5C depicts the magnified portion of the Bézier curve of FIG. 5A and a corresponding stroke defined using an exemplary Voronoi partitioning algorithm method for converting fill to stroke.
FIG. 6 is a table depicting the shapes of FIG. 5A after fill-to-stroke conversion using steps of an exemplary Voronoi partitioning algorithm.
FIG. 7 depicts a magnified portion of a self-intersecting shape outline and corresponding centerlines defined by the Voronoi partitioning algorithm method.
FIG. 8 depicts a composite line shape outline and corresponding centerline for illustration of an exemplary parallel line segment fill-to-stroke algorithm.
FIG. 9 depicts a composite Bézier curve outline for illustration of aspects of an exemplary parallel line segment fill-to-stroke algorithm.
FIG. 10A depicts a filled shape example for illustrating method steps of an exemplary parallel line segment fill-to-stroke algorithm.
FIG. 10B depicts an outline of the shape of FIG. 10A after executing initial steps of the exemplary parallel line segment fill-to-stroke algorithm.
FIG. 10C depicts an outline of the shape of FIG. 10B after executing additional steps of the exemplary parallel line segment fill-to-stroke algorithm.
FIG. 11A depicts a portion of the shape of FIG. 10B after executing intermediate line segment pair identification and connection steps in the exemplary parallel line segment fill-to-stroke algorithm.
FIG. 11B depicts a highlighted portion of the shape of FIG. 11A.
FIG. 11C depicts the shape of FIG. 10A after removal of redundant quadrilaterals.
FIG. 12 depicts centerlines resulting from execution of intermediate steps of the exemplary parallel line segment fill-to-stroke algorithm following the steps illustrated in FIGS. 11A-11D.
FIG. 13 depicts the centerlines of FIG. 12 after execution of centerline-connecting intermediate steps of the exemplary parallel line segment fill-to-stroke algorithm.
Fig. 14A depicts a stroke-based shape comprising a plurality of straight-line segment strokes collectively corresponding to the fill shape of FIG. 10A after execution of steps of exemplary parallel line segment fill-to-stroke algorithm.
FIG. 14B depicts a magnified portion of FIG. 14A.
Fig. 15 depicts the stroke-based shape of FIG. 14A after reconstruction of Bézier curves from the plurality of straight-line segments.

### DETAILED DESCRIPTION OF THE INVENTION

For the reasons noted in the background, there are various reasons why after a stroke has been converted to a fill may need to revert to a stroke. Typically, the information or instructions defining the stroke are often discarded after conversion to a fill. Accordingly, there is a need in the art to automatically converts at least selected filled line-art to stroked line-art in a graphics file, especially in a PDF file. This is essentially the inverse of a Convert Stroke to Fill Action.

Before converting a filled shape to a stroked path, the filled shape is first analyzed to characterize the shape type. FIG. 3 depicts a number of exemplary shapes in both Stroke and Fill format which may be particularly well suited for conversion of fill to stroke.

Each shape in the Fill format can be defined by the outline of the filled area. Working from these outlines, a stroke can be defined by the following parameters: an outline (center line) for the stroked path, a line width, a cap style, a join style, a dash pattern, and a matrix transform.

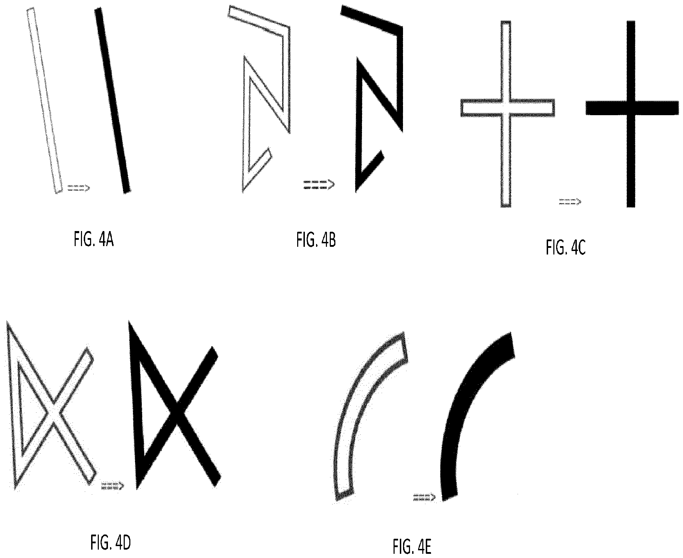

FIG. 4A depicts the conversion of a rectangle 400 that defines the outline of the fill to a straight line 410 defined by with butt (or square) caps. This is the simplest case. The fill outline is a rectangle which can be readily identified and for which its width can be calculated and defined as either a stroked path with butt caps or with projecting square caps. The shapes defined by FIG. 4B (a composite path formed of only straight lines), FIG. 4C (intersecting paths with straight lines), FIG. 4D (a self-intersecting path with straight lines), and FIG. 4E (a single Bézier) may be defined using skeletonization algorithms.

Various skeletonization algorithms are known in the art, including but not limited to Medial Axis computations, straight skeleton, and Voronoi partitioning algorithms. Advantages of the system as described later herein may be better understood with reference to implementation of a skeletonization algorithm using Voronoi partitioning.

### Voronoi partitioning

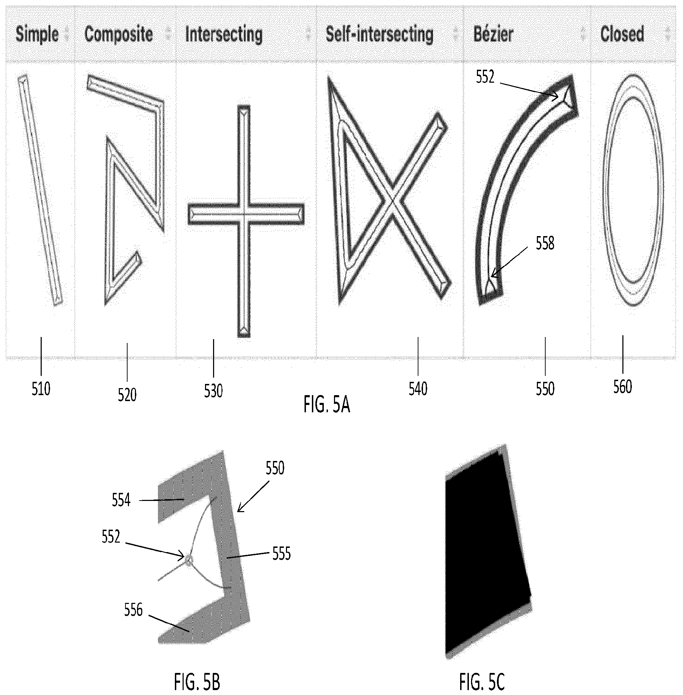

First, center lines are generated using the skeletonization algorithm, which results in a plurality of small, unconnected, straight lines (essentially, a sequence of moveto-lineto) operators, as depicted in FIG. 5A. A magnified portion of the end of the Bezier shape 550 is depicted in FIG. 5B. Point 552 (circled) denotes the intersection of Voronoi map edges that are contained within the original (filled) contour and are edges of 3 distinct Voronoi cells, which (per definition) are equidistant to 3 distinct original vertices 554, 555, 556 of the input outline. Creating a line between point 552 and analogous point 558 at the opposite end, with protruding square caps and a suitable line width, defines a converted stroke from the fill in which the protruding line caps closely fit the original stroke shape.

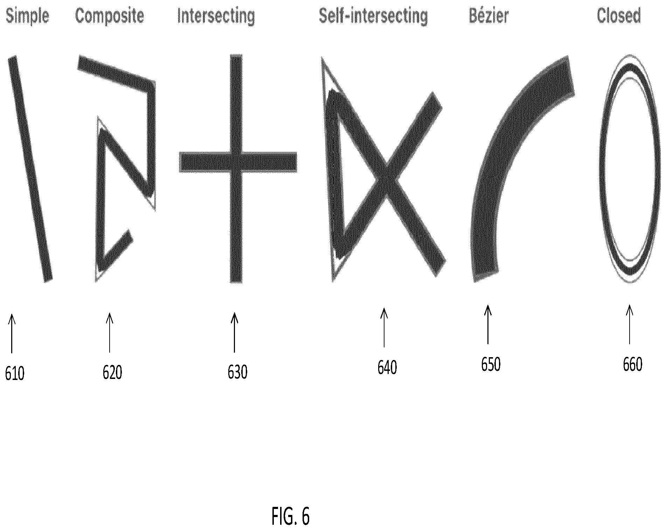

For Béziers this means that the final part of the 'bend' would be straightened out over half-linewidth length. What is left to do is to cut away the parts "outside" the line between the green circles of two end caps. One option is to manually fit a stroked line inside the fill, using protruding square caps and the original line width. This gives surprisingly good results in many cases, as can be observed in FIG. 6, but leaves a continuing need for improvement for corners between straight lines and for disproportionally scaled line-art.

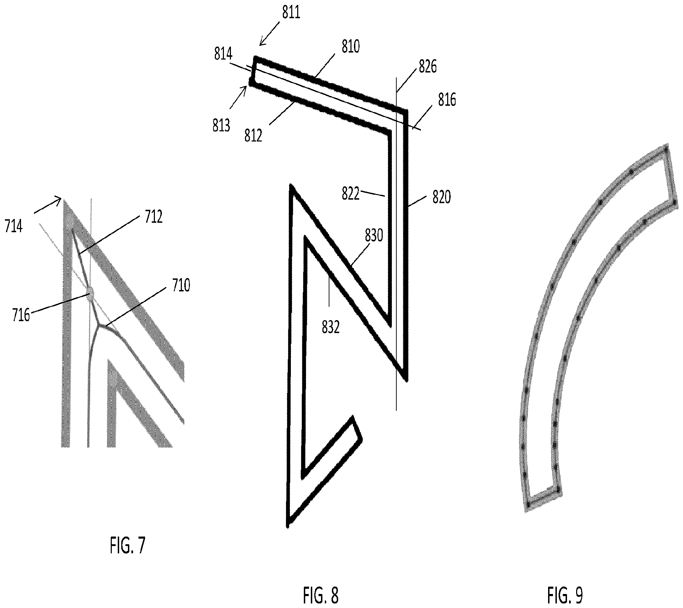

Referring to FIG. 7, for corners between straight lines, the composite skeleton path created using the Voronoi algorithm defines a skeleton line 710 that does not track the original stroke line but is rounded somewhat and has a branch 712 to an "outwards pointing" corner 714. As shown in FIG. 7B, converting the fill to stroke would benefit from locating point 716. If the algorithm is asked to determine if this rounded corner should be "straightened," it needs to first determine if the source of this straightening was a straight-lines corner or a Bézier. Unfortunately, Voronoi partitioning typically already involves approximating Bézier curves with straight lines so this information may be difficult or impossible to retrieve. An alternative approach is thus described.

In an alternative approach, Voronoi partitioning can produce center lines for arbitrary filled shapes. To get from the Voronoi partitioning to a stroked path thus may require substantial post-processing of the Voronoi segments.

### Parallel line segment approach

Because the filled shapes in this instance are the result of a stroke-to-fill conversion, it is possible to find the original center line with an alternative approach by assuming that the stroke-to-fill conversion results in a filled shape comprising a plurality of pairs of parallel line segments.

Starting with shape 800 depicted in FIG. 8A, the algorithm first detects straight-line segments that are parallel to each-other. For example, segments 810 and 812 are parallel to each other, as are the pair of segments 820, 822 and the pair of segments 830, 832, etc. If more than 2 segments are found to be parallel, additional logic may be implemented to determine which pairs belong together for purposes of the algorithm. The algorithm detects segments that draw the "end cap" of the stroke by identifying an unpaired connecting segment 814 between two end points (811, 813) of two parallel segments (810, 812) over a short distance, which distance can then be identified as the original line width of the original stroked path. Center lines (e.g. 816, 826) are defined equidistant between each parallel segment pair (e.g. 810, 812; 820, 822, respectively). The unconnected center lines 816, 826, and others (not shown) can be connected to form a single connected contour by calculating where the individual center lines for each segment intersect with one another, only considering intersection locations that are contained within the fill. Portions of the connected contour that intersect with the fill contour and are not at an "end cap" segment are cut away, or only parts located between intersections are kept along with segments of the fill contour that is recognized as an "end cap." Referring now to the shape depicted in FIG. 9, one approach to finding parallel segments is to approximate the Béziers with a series of short straight line segments, then run the centerline algorithm for straight lines on that series of segments, then reconstruct Béziers for each segment 910, 912 from the resulting straight-line centerlines for parts that originated from a Bézier in the fill contour. Straight lines originated from a "straightened" Bézier are tracked through completion the algorithm. A new Bézier is then fit through the connected center line pieces that have been generated using algorithms already known in the art, such as are described, e.g., at https://stackoverflow.com/questions/42315048/bezier-curve-fitting-with-known-end-points?noredirect=1&lq=1, incorporated herein by reference.

### Comparison

Both the Voronoi partitioning and parallel line segment algorithm are capable of producing center lines of a fill for an equivalent stroke. While Voronoi partitioning works on arbitrary filled shapes, it generally requires more post-processing than the parallel-line-segment approach, in particular because of challenges calculating which Voronoi segments need to be discarded. Additionally, reconstructing Bézier curves requires keeping track of which Voronoi segments were produced by line segments resulting from a Curve-to-Lines conversion. The parallel-line-segment approach as described above is best suited for filled shapes that were originally strokes, may be much faster because of less post-processing, and includes a more straightforward method for reconstructing Bézier curves. In particular, when looking to *invert* a prior Stroke-to-Fill conversion, the parallel-line-segment approach has particular advantages.

### Detailed parallel line segment fill-to-stroke conversion method

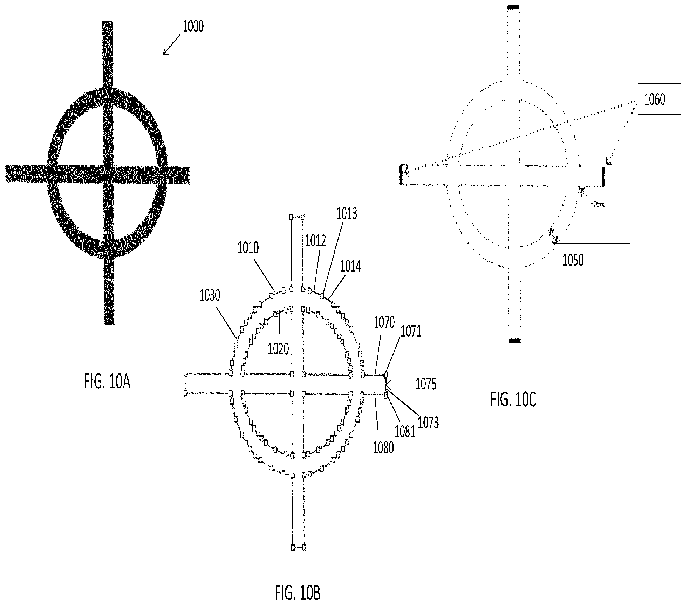

Method steps for implementing the parallel line segment fill-to-stroke approach as discussed herein follows. First, the algorithm finds the center line. Referring now to the fill shape 1000 generally depicted in FIG 10A, all Bézier segments in the input are converted to an approximation with straight line segments (e.g. 1010, 1020, 1030). Pairs of segments that run parallel to each other are identified from a subset of all segments, using a predetermined tolerance for the angle of the segment pairs. Using a tolerance is desirable because of limited floating-point precision and because the segments of the approximated Bézier segments may not run perfectly parallel. A reasonable tolerance value for the angle difference between parallel segments was found to lie between 0.005 and 0.02 radians, more preferably 0.08-1.2 radians, most preferably 0.09, 1.0, or 1.1 radians.

Finding parallel segments in a large set of segments may be time consuming as compared to only comparing the orientations of each segment with each other segment, which has a complexity of O(n²). This can be optimized by first sorting the segments by orientation (absolute angle relative to a fixed axis in the coordinate system) and then making one pass over this sorted list, and to stop comparing orientations once the difference is larger than the tolerance. This reduces complexity to O(n log(n)). The subset of parallel segments from which the parallel pairs are identified is determined by first calculating the absolute angle (relative to a fixed axis) of all segments in the coordinate system.

The most prevalent distance 1050 between these identified pairs is determined, and this is identified as the line weight of the resulting stroke, leaving the outline defined in FIG. 10B. The 'most prevalent' distance is the trimmed weighted average distance between parallel segments (i.e. weighted by the length of these segments, so longer segments contribute more than shorter segments, and pairs with a distance that is different from the identified line weight within a tolerance (e.g., 1%) discarded.

The algorithm identifies segments that define end caps 1060 by identifying parallel segments 1070, 1080 that have endpoints 1071, 1081 connected to one another only by one or more unpaired segments 1073 (e.g. not part of a segment-pair that remains after discarding non-most-prevalent-distance pairs). Endpoints 1071, 1081 may also be referred to as non-neighbor-connected endpoints, as they do not have a connection to a neighboring segment-pair, only to each other. The midpoint 1075 between the corresponding non-neighbor-connected endpoints defines the end-cap location.

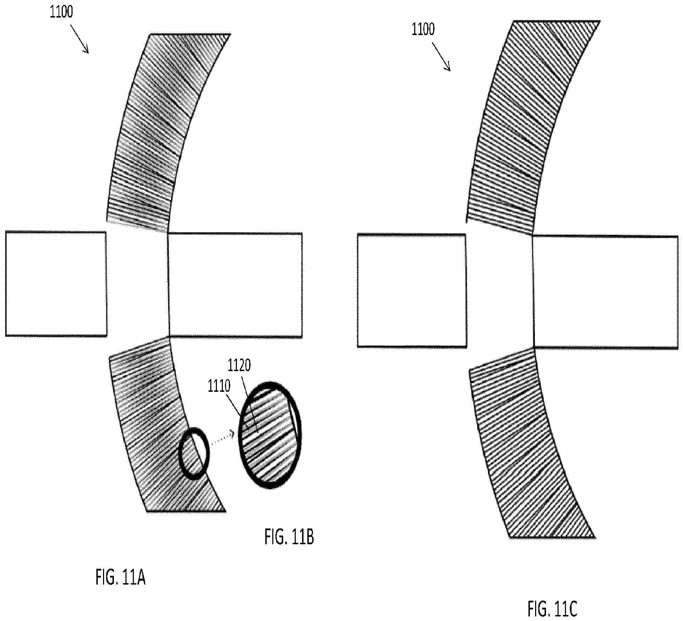

Notably, although illustrated in FIG. 10B as having a relatively small number of parallel pairs, the actual number may be far greater, as illustrated in more detail with respect to FIGS. 11A-11C.

Referring now to FIG. 11A -11C, the algorithm further reduces the number of non-end-cap-defining segment-pairs, for example, by next defining a plurality of quadrilaterals, e.g. 1110, 1120, etc. within shape 1100, by connecting the corresponding end points of each pair of remaining parallel segment-pairs. For segments that run parallel to more than one other segment, the algorithm keeps only the pair that forms the least distorted quadpoint (trapezoid) formed by the two segments of the segment-pair relative to a perpendicular line between the two segments. End-cap-defining segment-pairs are not discarded, however. The least distorted quad point is identified by determining a difference in the angle (normalized to [0, π/2]) of the sides of the quadpoint formed by the two segments relative to a line orthogonal to that segment. The absolute values of these differences of the two connecting lines that connect the respective ends of the segments are summed, and compared to the sum of the absolute values of the two connecting lines that connect the respective ends of the given segment to a second parallel segment in close proximity. Parallel pairs are considered to be in close proximity if one segment of the pair at least partially orthogonally projects onto the other segment of the pair. Thus, a perfect rectangle would have a quad point value of 0. Greater values indicate greater distortion. The differences between FIGS. 11A and 11C, as more clearly visualized in the magnified portion depicted in FIGS. 11B, illustrate the quadrilateral generation and discarding of shaded quadrilaterals as redundant. Methods for reducing the number of pairs is not limited to any particular set of steps.

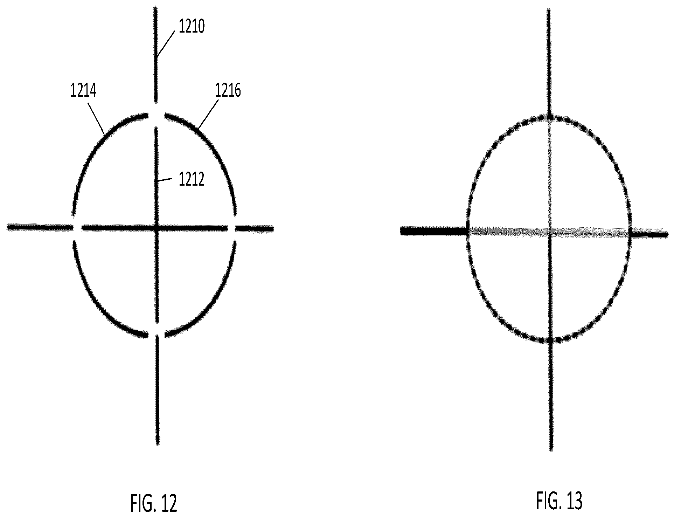

The algorithm then defines neighboring segment-pairs (e.g. 1012, 1014) as two segment-pairs in which at least one segment of each segment-pair of the two segment-pairs has a connection to at least one segment in the other segment-pair of the two segment-pairs, the connection comprising a shared endpoint (e.g. 1013) or adjacent endpoints connected to one another only by one or more unpaired segments. The algorithm then constructs, for each segment-pair, one output line segment as a centerline defined between the segments of the segment pair, the centerline having a length limited by an intersection with a centerline of a neighboring segment-pair, and by a midpoint 1075 between non-neighbor-connected end-points for an end-cap-defining segment-pair. The output line segments that have common end-points are then connected into connected paths, each connected path defining a stroke, such as is shown in FIG. 12.

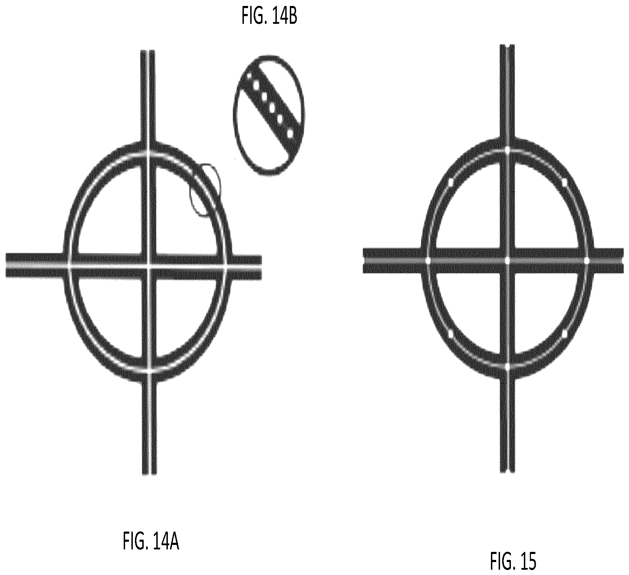

Referring now to FIG. 12, in embodiments, the algorithm may further designate a centerline connected on both ends; either to an endcap or to another centerline, as "finished." Pairs of unfinished segments that are not neighbor segments (e.g. 1210, 1212) are connected, with the connection point of their center lines at their geometric intersection. In the case of multiple candidate intersection points, the one that results in the shortest centerline is selected. In case of co-linear centerlines (e.g. 1214, 1216) the connection point may be put anywhere in-between. Co-linear segments are merged, resulting in the shape defined for the example in FIG. 13. Next, the connected center lines are converted to a stroked output path, such as is depicted in the example in FIGS. 14A and 14B, comprising a plurality of short stroked segments. Stroke properties such as color, alpha, overprint, etc. can be defined from the original fill properties. Bézier curves are reconstructed from the straight-line segments by curve fitting, providing the result depicted in FIG. 15.

For endcaps, only 2 styles need to be distinguished, because square-cap and protruding butt cap styles cannot be visually distinguished. Detecting round caps is done by analyzing the non-parallel, unpaired segments between the segment pairs. The end points of these segments should be approximately located at a constant distance from the endcap of the centerline as calculated herein above. Detecting square/butt caps is done similarly, by testing if the endpoints of these segments lie on the connecting line 1073 between the parallel segments at the end cap location.

Determining line join style involves determining which of 3 styles is present: miter, round or beveled. Detecting join style is done by analyzing the remaining sequences of non-parallel, non-end-cap segments. The algorithm for this involves finding the intersection point of the neighbor center lines and determining if the end points of these segments are approximately located at a constant distance (~1/2 line width) from the intersection point, in which case the joint is defined as a round join. If the end points of the segments are co-linear, then the join is defined as a miter or bevel join.

Identifying dash patterns involves identifying that several distinct filled shapes together form a converted dashed stroke. Typically, when a dashed stroke was converted to fill, it results in a path with many separate sub-paths, one for each dash. The algorithm as described above initially converts each dash separately to a short stroked line corresponding to each of these sub-paths. A second pass algorithm may then look for relationships among groups of short stroked lines. For example, after converting each of the filled sub-paths to a stroked sub-path, an exemplary second pass algorithm may include the steps of calculating the length of each stroked sub-path, putting these lengths in buckets with a tolerance (e.g. 1%), calculating the length of the gaps between end points of nearby stroked sub-paths, and putting these lengths in buckets (again, with a similar tolerance). The buckets with stroke lengths and gap lengths are analyzed to find the dash pattern of the original stroked path. Nearby stroked sub-paths are then connected. For example, connecting two stroked sub-paths that have straight line segments at their connection points may be connected either by merging them, if they are co-linear or by extending the straight-line segments to their geometric intersection point. For connecting 2 stroked sub-paths where one of the segments at a connection point is a Bézier, a curve is fitted through both stroked sub-paths to form a new connected set of sub-paths. The foregoing is completed until all stroked sub-paths are connected into a final path comprising a single sub-path. The dash pattern property as previously determined is then set on the final path as thus determined.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A computer-implemented method for defining one or more strokes corresponding to a fill shape in a graphics file, the method comprising the steps of:
a) defining an outline of the filled shape;
b) converting Bézier segments in the defined outline to an approximation with straight line segments;
c) identifying parallel pairs of segments within a predetermined angle tolerance;
d) identifying a most prevalent distance between the identified parallel pairs as a line weight corresponding to the resulting stroke, and discarding parallel pairs with a distance different from the identified line weight;
e) identifying end-cap-defining segment-pairs as comprising two segments in which adjacent endpoints are connected to one another through one or more unpaired segments.;
f) when multiple segment-pairs share a common segment, discarding all but the segment-pair that defines a least skewed trapezoid, without discarding any end-cap-defining segment-pairs;
g) identifying neighboring segment-pairs as two segment-pairs in which at least one segment of each segment-pair of the two segment-pairs has a connection to at least one segment in the other segment-pair of the two segment-pairs, the connection comprising a shared endpoint or adjacent endpoints connected to one another only by one or more unpaired segments;
h) constructing, for each segment-pair, one output line segment as a centerline defined between the segments of the segment pair, the centerline having a length limited by an intersection with a centerline of a neighboring segment-pair, and for an end-cap-defining segment-pair in which the segment pair defines a pair of end-points unconnected to a neighboring segment-pair, limited by a midpoint between the end-cap-defining segment-pair's unconnected end-points.
i) connecting output line segments that have common end-points into connected paths, each connected path defining one of the one or more strokes.

2. The method of claim 1, further comprising the steps of:
j) classifying centerlines having opposite ends connected to either an endcap or to another centerline as finished, and classifying remaining center lines as non-finished;
k) connecting pairs of non-finished e centerlines, merging co-linear segments; and converting the connected center lines to an output path defined by another of the one or more strokes.

3. The method of claim 1, further comprising defining additional stroke properties from original fill properties selected from the group consisting of: color, alpha, overprint.

4. The method of claim 1, further comprising constructing Bézier curves from one or more output line segments by curve fitting.

5. The method of claim 1, further comprising defining an end-cap style for each end cap.

6. The method of claim 5, further comprising identifying a round end-cap style by analyzing a plurality of non-parallel segments defined between two parallel segments and determining that end points of the plurality of non-parallel segments are located at an approximately constant distance from a defined end-cap of a corresponding center-line.

7. The method of claim 5, further comprising identifying a square or butt end-cap style by determining that endpoints of one or more non-parallel segments defined between two parallel segments lie on a connecting line between the parallel segments.

8. The method of claim 1, further comprising defining a line join style as miter, round or beveled.

9. The method of claim 8, further comprising identifying intersection points of center lines of neighbor non-parallel, non-end-cap segment pairs, determining if corresponding end points of the neighbor non-parallel are located at a constant distance at half the identified line width from the intersection point, identifying the join is defined as a round join, and if the corresponding end points of the segments are co-linear, then identifying the join as a miter or bevel join.

10. The method of claim 1, further comprising identifying a plurality of stroked sub-paths having gaps between nearest stroked sub-paths in a repeating pattern of stroke lengths and gaps therebetween as collectively defining a converted dashed stroke having a dash pattern.

11. The method of claim 1, wherein the fill shape comprises a shape converted from a stroke using a stroke-to-fill algorithm.
